# EUROPÄISCHE PATENTSCHRIFT

(11) **EP 1 712 648 B1**
(45) Veröffentlichungstag und Bekanntmachung des Hinweises auf die Patenterteilung: **28.11.2018**
(21) Anmeldenummer: 06007792.2
(22) Anmeldetag: 13.04.2006
(51) Int. Cl.: C22C 9/04, F16D 23/02

(54) **Kupfer-Zink-Legierung und Verwendung einer solchen Legierung**
Copper-zinc alloy and use thereof
Alliage cuivre-zinc et utilisation d'un tel alliage

(30) Priorität: 16.04.2005 DE 102005017574
(43) Veröffentlichungstag der Anmeldung: 18.10.2006
(73) Patentinhaber: Diehl Metall Stiftung & Co. KG, 90552 Röthenbach (DE)
(72) Erfinder: Holderied, Meinrad, 91338 Igensdorf (DE); Gebhard, Friedrich, 91207 Lauf/Peg (DE)
(74) Vertreter: Diehl Patentabteilung

(56) Entgegenhaltungen:
- EP-A- 0 313 036
- EP-A- 0 657 555
- GB-A- 207 826
- JP-A- 56 127 741
- JP-A- 56 163 231

## Beschreibung

Die Erfindung betrifft eine Kupfer-Zink-Legierung gemäß Patentanspruch 1 sowie eine Verwendung einer solchen Legierung gemäß Patentanspruch 8.

Für Materialien, die in Reibsystemen eingesetzt werden sind ein hoher Verschleißwiderstand sowie definierte und über die Lebensdauer konstante Reibeigenschaften von herausragender Bedeutung. Insbesondere für Synchronringe von Fahrzeuggetrieben werden neben dem hohen Verschleißwiderstand auch ein hoher dynamischer Reibkoeffizient sowie ein möglichst niedriges Losbrechmoment gefordert. Durch einen hohen Verschleißwiderstand wird die Lebensdauer der Bauteile gesteigert. Ein hoher dynamischer Reibkoeffizient ermöglicht eine Übertragung von hohen Reibmomenten und damit schnelles Schalten. Ein niedriges Losbrechmoment ist unter anderem Voraussetzung für einen guten Schaltkomfort.

Aus dem Stand der Technik ist bereits eine Vielzahl von Kupfer-Zink-Legierungen bekannt, die für Synchronringe verwendet werden. Beispielhaft sind hier die Legierung des Typs CuZn37Mn3Al2PbSi (EP-Norm CW713R) und die Legierung des Typs CuZn40Al2 (DIN-Norm 17660) zu nennen. In diesen Legierungen liegt Silizium abgebunden in Form von harten Siliziden - überwiegend Mangansiliziden - vor. Diese Legierungen weisen jedoch nur einen mittleren Verschleißwiderstand auf und zeigen ein hohes Losbrechmoment, was sich in kurzen Lebensdauern der Bauteile und mäßigem Schaltkomfort niederschlägt.

Gegenüber den genannten Normlegierungen weisen hoch legierte Messinglegierungen für Synchronringe, wie z. B. in der DE 37 35 738 oder der DE 29 19 478 beschrieben, eine erheblich gesteigerte Verschleißbeständigkeit auf. Diese Legierungen haben jedoch sehr hohe Materialkosten. Darüber hinaus ist das in diesen Legierungen enthaltene Silizium in intermetallischen Verbindungen abgebunden, nämlich als Nickelsilizid bzw. Mangan- oder Eisensilizid. Der hohe Anteil an intermetallischen Phasen beeinträchtigt die Bearbeitbarkeit dieser Legierungen und vermindert die Standzeit von Werkzeugen, wodurch sich deutlich höhere Herstellungskosten ergeben.

Aus der GB 207,826 A ist weiter eine Kupfer-Zink-Legierung bekannt, die in Gewichtsprozent bei einem Kupfer-Gehalt von etwa 58 % einen Anteil an Silizium von nicht weniger als 0,5 %, insbesondere zwischen 0,6 und 1,5 %, aufweist. Weiter sind in der angegebenen Kupfer-Zink-Legierung 2 bis 2,5 % Mangan sowie weniger als 4 % Eisen enthalten, die mit dem Silizium als Hartstoff Mischkristalle bilden. Zusätzlich sind 1,5 bis 2 % Aluminium, sowie 36 bis 37 % Zink enthalten. Die angegebene Legierung soll sich insbesondere für Lagerelemente eignen.

Ferner sind aus der JP 56163231 A und aus der JP 56127741 A jeweils eine Kupfer-Zink-Legierung bekannt, die in Gewichtsprozent 54 bis 66 % Kupfer, 1 bis 5 % Aluminium, 1 bis 5 % Mangan, 0,2 bis 1,5 % Silizium, 0,1 bis 2 % Eisen, 0,5 bis 4 % Nickel, 0,2 bis 2 % Zinn sowie Zink als Rest umfasst. Die Legierung gemäß der JP 56163231 A umfasst zusätzlich Blei mit einem Anteil zwischen 0,2 und 1,5 %. Die gewünscht hohe Härte und Verschleißbeständigkeit der angegebenen Kupfer-Zink-Legierungen beruht auf dem Vorhandensein von Mangansiliziden als intermetallische Verbindungen.

In Erkenntnis dieser Gegebenheiten liegt vorliegender Erfindung deshalb die Problemstellung zugrunde, eine Kupfer-Zink-Legierung und eine Verwendung einer solchen Legierung bereitzustellen, die eine hohe Verschleißbeständigkeit und ein verbessertes Losbrechverhalten aufweist, ohne dass dadurch eine gute Bearbeitbarkeit und eine kostengünstige Herstellbarkeit beeinträchtigt wird.

Die erstgenannte Aufgabe hinsichtlich einer Kupfer-Zink-Legierung wird erfindungsgemäß gelöst durch eine Kupfer-Zink-Legierung umfassend in Gewichtsprozent 58,2 bis 58,7 % Kupfer, 1,8 bis 2,2 % Aluminium, 2,4 bis 2,8 % Mangan, 0,9 bis 1,2 % Silizium, 0,2 bis 0,35 % Eisen, 0 bis 0,3 % Blei, bis 0,3 % Nickel, 0 bis 0,3 % Zinn, Rest Zink sowie unvermeidbare Verunreinigungen.

Zur Lösung der gestellten Aufgabe ist es von entscheidender Bedeutung, dass die Matrix der genannten Kupfer-Zink-Legierung einen geringen Anteil von Silizium enthält, das in freier Form vorliegt, also nicht in Form von Siliziden gebunden ist.

Es wird davon ausgegangen, dass das freie Silizium als Inhibitor gegen die Ausbildung von verschleißfördernden und das Losbrechmoment erhöhenden Triboschichten wirkt, die sich in Folge des Einwirkens von Öladditiven auf die Legierung bilden.

Entscheidend für die Verbesserung des Losbrechverhaltens ist es weiterhin, dass der Eisengehalt auf einen engen Konzentrationsbereich eingegrenzt ist. Sowohl niedrigere Gehalte als 0,15 % Eisen als auch Gehalte über 0,4 % verschlechtern das Losbrechverhalten erheblich.

Die genannte Kupfer-Zink-Legierung zeigt im Vergleich zu den bisher bekannten Standardlegierungen, sowohl im Reibverhalten als auch im Verschleißwiderstand eine erheblich gesteigerte Leistungsfähigkeit, wobei gleichzeitig die Vorteile von guter Herstell- und Bearbeitbarkeit bei insgesamt niedrigen Herstellungskosten bestehen bleiben. Die durch freies Silizium erzielten Verbesserungen der Legierungseigenschaften sind überraschend, denn bisher wurde davon ausgegangen, dass die Qualität von Reibeigenschaften und Verschleißwiderstand durch die Silizide positiv bestimmt werden. Freies Silizium dagegen wurde in Legierungen für Reibmaterialien vermieden, denn Silizium wirkt sich bekanntlich sehr stark auf die Ausprägung des Gefüges aus, was bei zu hoher Konzentration an freiem Silizium zur Bildung der unerwünschten Gamma-Phase führt. In den bisher bekannten Kupfer-Zink-Legierungen wird die Bildung der Gamma-Phase dadurch vermieden, dass Silizium vollständig in den intermetallischen Phasen abgebunden wird. Der vorteilhafte Anteil an freiem Silizium in der Matrix der beanspruchten Legierung wird durch die Kombination der Elementkonzentrationen von Eisen, Mangan und Silizium in den angegebenen Grenzen eingestellt. Durch die angegebene Konzentration an Aluminium werden eine Erhöhung der Festigkeit und eine Verbesserung der Gießbarkeit erzielt. Zur Verbesserung der an sich bereits guten Bearbeitbarkeit kann der Legierung Blei zugegeben werden. Nickel und Zinn bewirken eine Verbesserung des Formänderungsvermögens und erhöhen die Korrosionsbeständigkeit.

Die zweitgenannte Aufgabe hinsichtlich einer Verwendung wird erfindungsgemäß gelöst, durch die Verwendung einer solchen Kupfer-Zink-Legierung für Halbzeuge, Halbfabrikate und Synchronringe.

Aufgrund des herausragenden Reibverhaltens sowie des hohen Verschleißwiderstandes gepaart mit guter Herstellbarkeit und Bearbeitbarkeit bei niedrigen Herstellungskosten, eignet sich die genannte Legierung besonders für die Verwendung als Halbzeug, Halbfabrikat und Synchronring.

Eine solche Legierung weist gegenüber Standardlegierungen eine wesentlich höhere Verschleißbeständigkeit und ein deutlich besseres Losbrechverhalten auf, ohne dass die gute Bearbeitbarkeit und kostengünstige Herstellbarkeit beeinträchtigt ist.

Der besondere Vorteil dieser Legierung liegt darin, dass der Anteil an freiem Silizium in der Matrix bzw. im Gefüge exakt einstellbar ist.

In einer weiteren Ausführungsform weist die Kupfer-Zink-Legierung ein Gefüge mit einem Anteil von wenigstens 80 % Beta-Phase auf.

In Folge des sehr starken Einflusses von Silizium auf die Gefügebildung, in Verbindung mit der Neigung zur Bildung einer unerwünschten Gamma-Phase bei zu hoher Silizium-Konzentration, ist es für die Verbesserung der Reibeigenschaften wesentlich, dass einerseits ein ausreichend großer Anteil an freiem Silizium in der Matrix vorliegt, aber andererseits die Konzentration des freien Siliziums nicht zu hoch wird. Dies wird durch die Kombination der Elemente Eisen, Mangan und Silizium mit den angegebenen Konzentrationen eingestellt, wobei sich ein Mindestanteil von 80 % an Beta-Phase in der Matrix bildet.

In besonders vorteilhafter Weise, weist die Kupfer-Zink-Legierung ein Gefüge mit einem Anteil von wenigstens 95 % Beta-Phase auf. In bevorzugter Weise ist dabei im Gefüge der Legierung keine Gamma-Phase enthalten.

In einer bevorzugten Alternative weist die Kupfer-Zink-Legierung ein Verhältnis aus der Summe von Eisen- und Mangankonzentration zu der Siliziumkonzentration auf, das kleiner einschließlich 3 ist.

Durch die Einstellung des Verhältnisses Fe-Konzentration + Mn-Konzentration zu Si-Konzentration auf einen Wert kleiner gleich 3 wird besonders vorteilhaft gewährleistet, dass Silizium in freier Form vorliegt und in folge dessen das Losbrechmoment auf gewünschte niedrige Werte absinkt.

In einer besonders vorteilhaften Weiterbildung weist die Kupfer-Zink-Legierung ein Verhältnis aus der Summe von Eisen- und Mangankonzentration zu der Siliziumkonzentration auf, das einschließlich 2 und kleiner einschließlich 3 ist.

Durch die Einstellung des Verhältnisses Fe-Konzentration + Mn-Konzentration zu Si-Konzentration auf einen Wertebereich zwischen 2 und 3, bei dem die Bereichsgrenzen eingeschlossen sind, wird besonders vorteilhaft gewährleistet, dass der Anteil an freiem Silizium ausreichend hoch ist, um ein niedriges Losbrechmoment zu erhalten, ohne dabei jedoch unerwünschte Phasen in störendem Ausmaß zu zulassen.

Die Herstellung der beanspruchten Legierung erfolgt durch Kokillenguss bei einer Temperatur oberhalb 1000°C, gefolgt von einer Warmverformung durch Strangpressen im Temperaturbereich von 600 bis 800°C. Die abgekühlte Legierung wir im Anschluss bei 600 bis 800°C geschmiedet. Optional kann sich eine Auslagerungsglühung bei 250 bis 350°C anschließen.

Ein Ausführungsbeispiel sowie weitere Vorteile der Erfindung werden anhand der nachstehenden Beschreibung näher erläutert.

**Tabelle 1 zeigt Kupfer-Zink-Legierungen mit unterschiedlichen Zusammensetzungen (Anteile in Gewichtsprozent).**

| Lfd. Nr. | Cu | Pb | Fe | Al | Mn | Si | Sn | Ni | Zn |
|---|---|---|---|---|---|---|---|---|---|
| 1 | 58,5 | <0,1 | <0,1 | 1,7 | 2,6 | 0,8 | <0,2 | <0,1 | Rest |
| 2 | 58,5 | 0,4 | 0,5 | 1,6 | 2,0 | 0,8 | 0,3 | <0,1 | Rest |
| 3 | 57,6 | 0,5 | 0,45 | 1,6 | 2,0 | 0,6 | <0,2 | <0,1 | Rest |
| 4 | 58,5 | <0,1 | 0,25 | 2,0 | 2,6 | 1,05 | <0,2 | <0,1 | Rest |

Bei den Legierungen 1 bis 3 handelt es sich um Standardlegierungen des Typs CuZn37Mn3Al2PbSi, bei Legierung 4 handelt es sich um ein Ausführungsbeispiel der beanspruchten Legierung mit einer bevorzugten Zusammensetzung.

**Tabelle 2 zeigt die ermittelten Verschleißwiderstände in km/g der Legierungen aus Tabelle 1 in verschiedenen Getriebeölen.**

| Lfd. Nr. | Getriebe-Öl 1 (ATF) | Getriebe-Öl 2 (mineralisch) | Getriebe-Öl 3 (synthetisch) | Getriebe-Öl 4 (EP) |
|---|---|---|---|---|
| 1 | 95 - 105 | - | - | - |
| 2 | 125 - 200 | - | - | 455 - 510 |
| 3 | - | 245 - 290 | 205 - 235 | - |
| 4 | 280 - 410 | 630 - 790 | 625 - 780 | 1140 - 1390 |

Die Lebensdauer eines in Reibsystemen eingesetzten Bauteils wird durch den Verschleißwiderstand bestimmt, wobei die Lebensdauer mit Ansteigen des Verschleißwiderstandes zunimmt. Die Messwerte in Tabelle 2 zeigen, dass, unabhängig vom verwendeten Getriebeöl, die beanspruchte Legierung 4 einen um den Faktor 2 bis 3 höheren Verschleißwiderstand besitzt als die bisher bekannten Standardlegierungen (Nr. 1 bis 3) und damit auch eine deutlich längere Lebensdauer.

**Tabelle 3 zeigt Mittelwerte der Reibungskennwerte der in Tabelle 1 aufgeführten Legierungen nach einem Einlauf von 100 Schaltvorgängen.**

| Lfd. Nr. | Dynamischer Reibkoeffizient | Losbrechmoment (Nm) |
|---|---|---|
| Getriebe-Öl 2 (mineralisch) | | |
| 1 | 0,121 | 10 - 13 |
| 2 | 0,120 | 0 - 7 |
| 4 | 0,121 | 0 - 0,5 |

| Getriebe-Öl 1 (ATF) | | |
|---|---|---|
| 3 | 0,121 | 12 - 15 |
| 4 | 0,117 | 0 - 1 |

Reibeigenschaften werden beschrieben durch den dynamischen Reibkoeffizient und das Losbrechmoment. Ist der dynamische Reibkoeffizient einer Legierung hoch, ermöglicht ein aus dieser Legierung gefertigtes Bauteil die Übertragung von hohen Reibmomenten und damit auch schnelles Schalten. Legierung Nr. 4 zeigt den gewünscht hohen dynamischen Reibkoeffizient, wie sie ihn auch die bekannten Legierungen besitzen. Das Losbrechmoment ist ein Maß für den Schaltkomfort. Idealerweise sollte das Losbrechmoment null sein, damit die Schiebemuffenverzahnung nach dem Synchronisiervorgang ungehindert in die Schaltverzahnung des Gangrades einrücken kann. Muss dagegen ein Losbrechmoment aufgebracht werden, um den Synchronring vom Reibkonus zu lösen, macht sich dies in einem zweiten Druckpunkt am Schalthebel bemerkbar, was als Minderung des Schaltkomforts empfunden wird. Je niedriger also das Losbrechmoment ist, desto besser ist der Schaltkomfort.

Die Messwerte in Tabelle 3 zeigen, dass die beanspruchte Legierung Nr. 4 ein nahezu ideales Losbrechmoment mit Werten von 0 - 1 Nm auch für verschiedene Getriebeöle aufweist, wogegen die Standardlegierungen Nr. 1 bis 3 auch nach der Einlaufphase von 100 Schaltungen unerwünscht hohe Losbrechmomente aufweisen. So ist das Losbrechmoment der Legierungen Nr. 1 und Nr. 3 sehr hoch und um gut eine Größenordnung größer als das der beanspruchten Legierung 4. Etwas geringer ist das Losbrechmoment der Legierung Nr. 2. Jedoch ist aufgrund der hohen Schwankungsbreite des Losbrechmoments dieser Legierung deren Verwendung unvorteilhaft, da die hohe Schwankungsbreite zu stark variierendem Schaltverhalten führt, was bezüglich des Schaltkomforts sehr negativ zu bewerten ist.

In der Zusammenschau der Tabellen 1 und 3 wird deutlich, dass ein niedrigerer Eisengehalt als 0,15 % sowie ein höherer Eisengehalt als 0,4 % das Losbrechverhalten erheblich verschlechtert. Somit muss, um das Losbrechverhalten zu verbessern, der Eisengehalt eingegrenzt sein.

Insgesamt zeigen die Messwerte der obigen Tabellen, dass es mit der Erfindung gelungen ist, eine Legierung zur Verfügung zu stellen, die sowohl im Reibverhalten als auch im Verschleißwiderstand eine gegenüber den Standardlegierungen erheblich gesteigerte Leistungsfähigkeit aufweist, wobei die Vorteile von guter Herstellbarkeit und Bearbeitbarkeit bei insgesamt niedrigen Herstellkosten, voll erhalten bleiben.

## Patentansprüche

1. Kupfer-Zink-Legierung,
umfassend in Gewichtsprozent 58,2 bis 58,7 % Kupfer, 1,8 bis 2,2 % Aluminium, 2,4 bis 2,8 % Mangan, 0,9 bis 1,2 % Silizium, 0,2 bis 0,35 % Eisen, 0 bis 0,3 % Blei, 0 bis 0,3 % Nickel, 0 bis 0,3 % Zinn, Rest Zink sowie unvermeidbare Verunreinigungen.

2. Kupfer-Zink-Legierung nach Anspruch 1,
umfassend ein Gefüge mit einem Anteil von wenigstens 80 % Beta-Phase.

3. Kupfer-Zink-Legierung nach Anspruch 2,
umfassend ein Gefüge mit einem Anteil von wenigstens 95 % Beta-Phase.

4. Kupfer-Zink-Legierung nach einem der vorhergehenden Ansprüche, wobei das Verhältnis aus der Summe von Eisen- und Mangankonzentration zu der Siliziumkonzentration kleiner einschließlich 3 ist.

5. Kupfer-Zink-Legierung nach Anspruch 4,
wobei das Verhältnis aus der Summe von Eisen- und Mangankonzentration zu der Siliziumkonzentration größer einschließlich 2 und kleiner einschließlich 3 ist.

6. Verwendung einer Kupfer-Zink-Legierung nach einem der Ansprüche 1 bis 5 für Halbzeuge, Halbfabrikate und Synchronringe.

## Claims

1. Copper-zinc alloy, comprising, in percent by weight, 58.2 to 58.7% copper, 1.8 to 2.2% aluminium, 2.4 to 2.8% manganese, 0.9 to 1.2% silicon, 0.2 to 0.35% iron, 0 to 0.3% lead, 0 to 0.3% nickel, 0 to 0.3% tin, remainder zinc and inevitable impurities.

2. Copper-zinc alloy according to Claim 1, comprising a microstructure with a beta phase fraction of at least 80%.

3. Copper-zinc alloy according to Claim 2, comprising a microstructure with a beta phase fraction of at least 95%.

4. Copper-zinc alloy according to one of the preceding claims, in which the ratio of the sum of iron and manganese concentration to the silicon concentration is less than or equal to 3.

5. Copper-zinc alloy according to Claim 4, in which the ratio of the sum of iron and manganese concentration to the silicon concentration is greater than or equal to 2 and less than or equal to 3.

6. Use of a copper-zinc alloy according to one of Claims 1 to 5 for semi-finished products, intermediates and synchronizer rings.

## Revendications

1. Alliage cuivre-zinc, comprenant en pourcentages en poids :
58,2 à 58,7 % de cuivre, 1,8 à 2,2 % d'aluminium, 2,4 à 2,8 % de manganèse, 0,9 à 1,2 % de silicium, 0,2 à 0,35 % de fer, 0 à 0,3 % de plomb, 0 à 0,3 % de nickel, 0 à 0,3 % d'étain, le reste étant du zinc et des impuretés inévitables.

2. Alliage cuivre-zinc selon la revendication 1, comprenant une structure ayant une proportion d'au moins 80 % de phase bêta.

3. Alliage cuivre-zinc selon la revendication 2, comprenant une structure ayant une proportion d'au moins 95 % de phase bêta.

4. Alliage cuivre-zinc selon l'une quelconque des revendications précédentes, dans lequel le rapport entre la somme de la concentration de fer et de manganèse et la concentration de silicium est inférieur ou égal à 3.

5. Alliage cuivre-zinc selon la revendication 4, dans lequel le rapport entre la somme de la concentration de fer et de manganèse et la concentration de silicium est supérieur ou égal à 2 et inférieur ou égal à 3.

6. Utilisation d'un alliage cuivre-zinc selon l'une quelconque des revendications 1 à 5 pour des produits semi-finis, des produits semi-fabriqués et des synchroniseurs.
